# EUROPÄISCHE PATENTSCHRIFT

(11) **EP 3 147 737 B1**
(45) Veröffentlichungstag und Bekanntmachung des Hinweises auf die Patenterteilung: **05.05.2021**
(21) Anmeldenummer: 16189431.6
(22) Anmeldetag: 19.09.2016
(51) Int. Cl.: G05B 19/416

(54) **VERFAHREN ZUR STEUERUNG EINER GREIF- ODER SPANNVORRICHTUNG SOWIE ZUGEHÖRIGE GREIF- ODER SPANNVORRICHTUNG**
METHOD FOR CONTROLLING A GRIPPING OR CLAMPING DEVICE AND ASSOCIATED GRIPPING OR CLAMPING DEVICE
PROCÉDÉ DE COMMANDE D'UN DISPOSITIF DE PRÉHENSION OU DE SERRAGE AINSI QUE DISPOSITIF DE PRÉHENSION OU DE SERRAGE ASSOCIÉ

(30) Priorität: 22.09.2015 DE 102015218198
(43) Veröffentlichungstag der Anmeldung: 29.03.2017
(73) Patentinhaber: Schunk GmbH & Co. KG Spann- und Greiftechnik, 74348 Lauffen am Neckar (DE)
(72) Erfinder: Fellhauer, Bruno, 74336 Brackenheim (DE)
(74) Vertreter: DREISS Patentanwälte PartG mbB

(56) Entgegenhaltungen:
- DE-A1- 4 339 565
- JP-A- 2010 041 864
- US-A1- 2004 017 170

## Beschreibung

Die Erfindung betrifft ein Verfahren zur Steuerung einer einen elektrischen Motor aufweisenden Greif- oder Spannvorrichtung, mit wenigstens einer vom Motor antreibbaren, zwischen Anschlägen hin- und rückverfahrbaren Backe. Die Erfindung betrifft auch eine derartige Greif- oder Spannvorrichtung.

Ein Verfahren zur Steuerung einer einen elektrischen Motor aufweisenden Greif- oder Spannvorrichtung, mit wenigstens einer vom Motor antreibbaren, zwischen Anschlägen hin- und rückverfahrbaren Backe und eine zugehörige Greifvorrichtung ist aus der EP 0 291 623 A1 bekannt.

Ein Verfahren und eine Greifvorrichtung mit Merkmalen des Oberbegriffs des Patentanspruchs 1 ist aus der JP 2010 041864 A bekannt.

Derartige Greif- oder Spannvorrichtungen dienen in der Regel zum Handhaben oder Festsetzen von Gegenständen. An die Lebensdauer von solchen Greifvorrichtungen werden hohe Anforderungen gestellt, es werden mehrere Millionen Greifzyklen bei möglichst kurzen Greifzeiten gefordert.

Der Erfindung liegt die Aufgabe zugrunde, ein eingangs genanntes Verfahren sowie eine Greif- oder Spannvorrichtung zur Verfügung zu stellen, mit der eine Erhöhung von Greifzyklen möglich ist, ohne die Funktionsfähigkeit oder die Greifzeiten solcher Greif- oder Spannvorrichtungen zu beeinträchtigen.

Diese Aufgabe wird durch ein Verfahren mit den Merkmalen des Anspruchs 1 gelöst. Folglich ist vorgesehen, dass in einer Anfahrphase, also insbesondere beim ersten Hinlauf und/oder beim ersten Rücklauf der Backe, die Backe mit nur einer geringen Anfahrgeschwindigkeit V_{G} gefahren wird, insbesondere also der Motor nur mit einem geringen Anfahrstrom I_{A} bestromt wird, mit der die Backe beschädigungsfrei gegen den Anschlag bewegt wird. Die Anfahrgeschwindigkeit V_{G} ist also so gewählt, dass ein Auftreffen der Backe auf den Anschlag beschädigungsfrei möglich ist. In der Regel ist in der Anfangsphase nicht bekannt, an welcher Position sich die Anschläge befinden. Die Backe trifft deshalb in der Anfangsphase mit der vollen Anfahrgeschwindigkeit V_{G} gegen den jeweiligen Anschlag. Da die Position der Backe bei der Beaufschlagung der Backe gegen den Anschlag, und damit die Positionen des wenigstens einen Anschlags, gemessen und hinterlegt wird, kann in dieser Anfahrphase folglich eingelernt werden, wo sich die Anschläge befinden.

Ferner ist vorgesehen, dass in einer Betriebsphase, also dann wenn der eigentliche Greif- oder Spannvorgang erfolgt, zunächst die Backe über eine Wegstrecke Xᵥ mit einer Verfahrgeschwindigkeit Vᵥ, die höher ist als die Anfahrgeschwindigkeit V_{G}, verfahren wird, beispielsweise durch Bestromung des Motors mit einem Verfahrstrom Iᵥ. Daran schließt sich ein Abbremsen der Backe vor dem Auftreffen der Backe auf einen Anschlag durch Reduzieren der Verfahrgeschwindigkeit Vᵥ auf eine Bremsgeschwindigkeit V_{gx} an. Ein Abbremsen der Backe vor dem Auftreffen auf den Anschlag ist in der Betriebsphase möglich, da die Position der Anschläge in der Anfangsphase detektiert und eingelernt wurde. Folglich kann die Backe rechtzeitig von der hohen Verfahrgeschwindigkeit auf die geringere Bremsgeschwindigkeit abgebremst werden. Die Bremsgeschwindigkeit V_{gx} kann dabei der Anfahrgeschwindigkeit V_{G} entsprechen.

Damit einher geht eine Reduzierung des Impulses, mit dem die Backe gegen den Anschlag auftrifft. Durch diese Impulsreduktion kann eine wesentliche Erhöhung der Lebensdauer der Greif- oder Spannvorrichtungen erreicht werden. Der Impuls, mit dem die Backe mit der Bremsgeschwindigkeit V_{g} auf den Anschlag auftrifft, ist wesentlich geringer als der Impuls, wenn die Backe mit einer vollen Verfahrgeschwindigkeit Vᵥ gegen den Anschlag treffen würde. Dennoch können in Summe sehr hohe Verfahrgeschwindigkeiten und damit kurze Greifzeiten bzw. kurze Greifzyklen realisiert werden.

Die Anschläge können dabei von Festanschlägen an der Greif- oder Spannvorrichtung gebildet sein. Andererseits können die Anschläge auch, oder zumindest ein Anschlag, von einem zu greifenden oder zu spannenden Gegenstand gebildet sein. Insbesondere dann, wenn unterschiedliche Gegenstände gegriffen oder gespannt werden, kann sich die Position des gegenstandsseitigen Anschlags ändern.

Zudem werden die Positionen der Backe bei jeder Beaufschlagung der Backe gegen einen Anschlag, und damit die Positionen der Anschläge, gemessen und hinterlegt. Die Hinterlegung kann insbesondere in einer Steuerung, bzw. in einem Speicherbaustein der Steuerung erfolgen. Damit ist nach jedem Anschlagen der Backe gegen einen Anschlag die Position des jeweiligen Anschlags bekannt. Insofern kann die Reduzierung der Geschwindigkeit der Backe vor Auftreffen der Backe auf den Anschlag zum richtigen Zeitpunkt erfolgen. Auch die Bestromung des Motors mit dem Greifstrom, insbesondere beim Auftreffen der Backe, kann im richtigen Zeitpunkt erfolgen, da die Position des jeweiligen Anschlags bekannt ist.

Besonders vorteilhaft ist, wenn kurz vor, zeitgleich mit, oder nach dem Auftreffen der Backe auf den Anschlag der Motor mit einem Greifstrom I_{G} bestromt wird, so dass die Backe am Ende der Bewegung sicher gegen den Anschlag beaufschlagt wird. Der Greifstrom I_{G} ist dabei vorzugswiese größer als der der Verfahrgeschwindigkeit zugeordnete Verfahrstrom Iᵥ.

Mit der Überwachung der Anschlagpositionen kann zudem auf die Baugröße des angegriffenen Bauteils rückgeschlossen werden. Folglich können die gegriffenen Bauteile über das erfindungsgemäße Verfahren auch vermessen werden.

Für den Fall, dass sich die Position des einen oder anderen Anschlags bei verschiedenen, nacheinander folgenden Greifzyklen ändert, wird dies sofort detektiert. Die Ansteuerung des Motors mit dem Verfahrstrom, mit dem Greifstrom und das Abbremsen der Backe kann darauf abgestimmt werden.

Das Abbremsen der Backe vor dem Auftreffen der Backe auf den Anschlag kann insbesondere durch eine Reduzierung oder durch Abschalten des Motorstroms erfolgen. Das Abbremsen der Backe vor dem Auftreffen der Backe auf den Anschlag kann aber auch durch ein aktives Abbremsen durch Bestromung des Motors mit einem Umkehrstrom erfolgen. Ferner ist denkbar, dass zusätzlich oder alternativ die Reibung der Backe und/oder eines zwischen der Backe und dem Motor vorgesehenen Getriebe derart ist, dass die Backe bei Abschalten des Motorstroms abgebremst wird.

Vorteilhafterweise werden zudem die Verfahrgeschwindigkeit und/oder die Auftreffgeschwindigkeit der Backe überwacht. Sollte die Verfahrgeschwindigkeit zu hoch sein bzw. die Auftreffgeschwindigkeit zu hoch sein, kann regelnd eingegriffen werden und insbesondere die Anfahrgeschwindigkeit V_{G} und/oder Bremsgeschwindigkeit V_{gx} entsprechend angepasst werden. Zudem kann auch der Motorstrom überwacht werden.

Die eingangs genannte Aufgabe wird auch durch eine Greif- oder Spannvorrichtung gelöst, die wenigstens eine zwischen Anschlägen hin- und rückverfahrbare Backe, einen elektrischen Motor zum Antreiben der Backe, Wegmessmittel zur Bestimmung der Lage der Backe, und eine Steuerung zur Ansteuerung des Motors in Abhängigkeit der Signale der Wegmessmittel aufweist. Die Greif- oder Spannvorrichtung ist dabei derart ausgebildet und eingerichtet, dass sie im Betrieb gemäß dem erfindungsgemäßen Verfahren betrieben wird. Aufgrund der stattfindenden Impulsreduktion erhöht sich damit die Lebensdauer einer solchen Greif- oder Spannvorrichtung gegenüber bekannten Greif- oder Spannvorrichtungen. Der Motor kann insbesondere ein Linearmotor oder ein rotierender Motor sein.

Dabei kann vorgesehen sein, dass Schaltermittel vorhanden sind, mit denen der Verfahrstrom Iᵥ, der Bremsstrom I_{B}, der Greifstrom I_{G}, die Verfahrgeschwindigkeit, die Anfahrgeschwindigkeit und/oder die Bremsgeschwindigkeit einstellbar sind. Denkbar ist, dass verschiedene Schaltermittel für die einzelnen Ströme und/oder Geschwindigkeiten realisiert werden. Allerdings ist auch denkbar, dass lediglich ein Schaltermittel realisiert wird, das dann den genannten Strömen hinterlegte Geschwindigkeiten zuordnet.

Weitere Vorteile und vorteilhafte Ausgestaltungen der Erfindung sind der nachfolgenden Beschreibung zu entnehmen, anhand derer Ausführungsbeispiele der Erfindung näher beschrieben und erläutert sind.

Es zeigen:
- Figur 1: eine schematische Darstellung einer erfindungsgemäßen Greifvorrichtung; und
- Figur 2 bis 5: den Verfahrweg der in Figur 1 gezeigten Greifbacke über der Verfahrgeschwindigkeit und dem Motorstrom in verschiedenen Betriebszuständen.

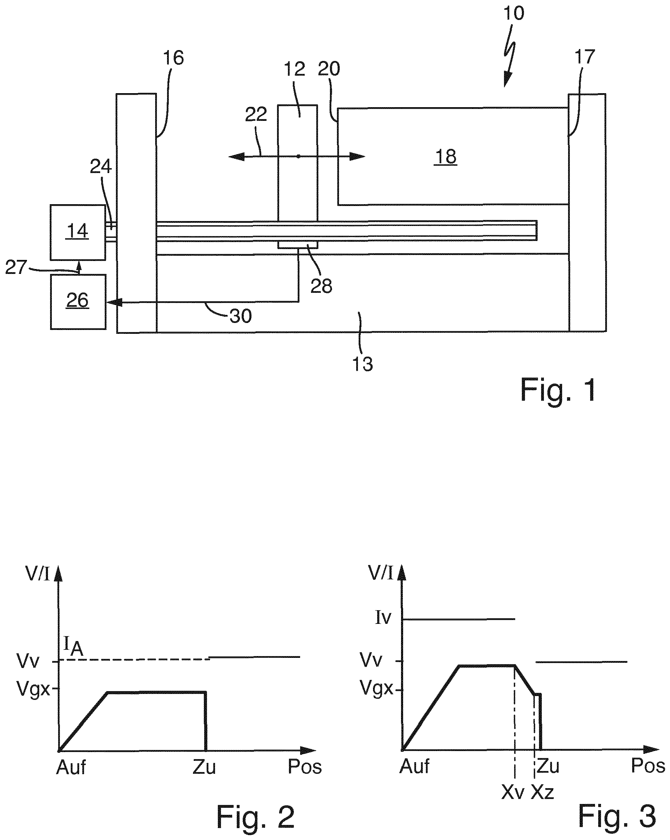

Die in der Figur 1 gezeigte Greifvorrichtung 10 umfasst eine Greifbacke 12, die über einen Motor 14 zwischen einem Festanschlag 16 und einem durch ein zu greifendes Bauteil 18 gebildeten Anschlag 20 entlang einer Verfahrrichtung 22, die durch die Pfeile angedeutet ist, hin- und herbewegbar ist. Die Backe 12 wird dabei entlang eines Gehäuses 13 geführt.

Der Motor 14 kann dabei als Elektromotor ausgebildet sein, der eine rotierende Abtriebswelle 24 aufweist. Die Abtriebswelle 24 kann als Gewindestange ausgebildet sein, welche mit der Backe 12 derart in Eingriff steht, dass die rotierende Bewegung der Abtriebswelle 24 in eine Hin- und Herbewegung der Backe entlang der Verfahrrichtung 22 umgewandelt wird.

Andererseits ist auch denkbar, dass der Motor 14 als Linearmotor ausgebildet ist, wobei dann gehäuseseitig ein Stator mit entsprechenden Magnetwicklungen vorgesehen ist, und die Backe dann das Sekundärteil mit Permanentmagneten bildet.

Bei der in der Figur 1 dargestellten Greifvorrichtung 10 ist lediglich eine verfahrbare Backe 12 vorgesehen. Erfindungsgemäß ist allerdings denkbar, dass auch zwei aufeinander zu und voneinander weg verfahrbare Backen vorgesehen sein können (Parallelgreifer), oder das drei zentrisch aufeinander zu und voneinander weg verfahrbare Backen vorgesehen sein können (Zentrischgreifer).

Die Greifvorrichtung 10 umfasst außerdem eine Steuerung 26, die den Motor 14 über eine Leitung 27 ansteuert. Zudem sind Wegmessmittel 28 vorgesehen, die die jeweilige Lage der Backe 12 detektieren und entsprechende Signale über die Leitung 30 der Steuerung 26 zuführen.

Am Gehäuse 13 ist neben dem Festanschlag 16 ein weiterer Festanschlag 17 vorgesehen, an dem das zu spannende Bauteil 18 im gespannten Zustand anliegt.

Die Greifvorrichtung 10 ist dabei derart eingerichtet, dass sie im Betrieb wie folgt arbeitet:
Nach Inbetriebnahme der Greifvorrichtung 10 wird in einer Anfahrphase, insbesondere beim ersten Hin- und Rücklauf der Backe 12 der Motor mit einem geringen Anfahrstrom I_{A} bestromt. Dadurch wird, wie in Figur 2 gezeigt, die Backe 12 auf eine Geschwindigkeit Vgₓ beschleunigt. Die Geschwindigkeit V_{gx} ist so gewählt, dass die Backe 12 beschädigungsfrei gegen den jeweiligen Anschlag 16, 20 bewegt wird. Nach dem Auftreffen der Backe 12 auf den Anschlag 17, bzw. bei vorhandenem Bauteil 18 auf den Anschlag 20, beträgt die Geschwindigkeit dann Null und die Backe 12 nimmt die Position "zu" ein. Der Strom I_{A} bleibt dabei weitgehend konstant.

Aufgrund der Wegmessmittel werden die Positionen "auf" und "zu" bzw. "gegriffen" erkannt und in der Steuerung 26 hinterlegt.

Nachdem die Positionen "auf" und "zu" bzw. "gegriffen" bekannt sind, wird in der sich an die Anfahrphase anschließenden Betriebsphase, die in Figur 3 gezeigt ist, die Backe über Xᵥ mit dem Verfahrstrom I_{V} bestromt. Dadurch wird die Backe mit einer Geschwindigkeit V_{V} bewegt, die größer ist als die Geschwindigkeit V_{gx}. Bei Erreichen der Position Xᵥ wird die Geschwindigkeit Vᵥ auf den Wert V_{gx} reduziert und die Backe abgebremst. Kurz vor Erreichen des Anschlags 20, bzw. der Position "zu", kann zusätzlich in der Position X_{z} der Motor mit dem Greifstrom I_{G} bestromt werden, so dass die Backe gegen den Anschlag 20 sicher beaufschlagt wird.

Dadurch wird gewährleistet, dass der Impuls, mit dem die Backe auf den Anschlag 20 auftrifft, reduziert wird. Insgesamt ergibt sich hierdurch eine erhöhte Lebensdauer der Greifvorrichtung 10. X_{Z} ist dabei so zu wählen, dass zum einen eine ausreichende Impulsreduktion gewährleistet wird, aber dass zum anderen auch ein sicheres Greifen des Bauteils 18 sichergestellt ist.

Ein Abbremsen der Backe 12 kann insbesondere durch Abschalten des Motorstroms erfolgen. Ferner ist denkbar, dass die Backe 12 über den Motor 14 aktiv abgebremst wird, insbesondere durch Bestromung des Motors 14 mit einem Umkehrstrom. Ferner kann vorteilhaft sein, die Reibung zwischen der Backe 12 und dem Gehäuse und/oder die Reibung eines zwischen der Backe 12 und dem Motor 14 vorgesehenen Getriebes so zu wählen, dass die Backe 12 bei Abschalten des Mutterstroms abgebremst wird. Die einzelnen Maßnahmen können sich ergänzend oder alternativ zueinander zum Einsatz kommen, je nach Ausführungsform der Greifvorrichtung.

Der Motor 14 wird zudem derart angesteuert, dass die Backe 12 beim Rückfahren entweder nicht gegen den Anschlag 16 oder ebenfalls mit einem reduzierten Impuls gegen den Anschlag 16 auftrifft.

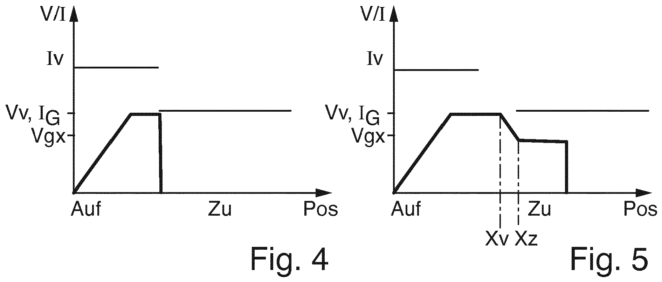

In Figur 4 ist nun der Fall gezeigt, bei dem die Backe 12 unerwartet früh auf den Anschlag 20 auftrifft, beispielsweise weil ein Bauteil 18 gegriffen wird, das größer ist als das zuvor Gegriffene. Die Backe 12 trifft dann mit der hohen Geschwindigkeit V_{V} auf den Anschlag 20 in der Position "zu". Die Wegmesssensoren 28 detektieren, dass die Backe 12 auf den Anschlag 20 trifft. Der Strom wird dann vom Wert I_{V} auf den Wert I_{G} reduziert.

Figur 5 zeigt den Fall, dass die Backe unerwartet spät auf den Anschlag 20 auftrifft, beispielsweise weil ein Bauteil 18 gegriffen wird, das kleiner ist als das zuvor Gegriffene. Die Wegstrecke zwischen der Position X_{Z} und der Position "zu" verlängert sich dadurch. Die Backe wird dann mit der Geschwindigkeit V_{gx} über einen längeren Wegabschnitt in die Position "zu" gefahren.

Wie aus Figur 3 und 5 deutlich wird, wird bei Erreichen der Position X_{V} die Geschwindigkeit reduziert. Entscheidend ist, dass die Auftreffgeschwindigkeit der Backe 12 auf den jeweiligen Anschlag 20 einen vorgegebenen Wert V_{gx} möglichst nicht überschreitet, um eine Beschädigung zu vermeiden und um die gewünschte Impulsreduktion zu erzielen.

Über die Wegmesssensoren 28 wird vorzugsweise die jeweilige Verfahrgeschwindigkeit und auch die Auftreffgeschwindigkeit der Backe 12 auf den jeweiligen Anschlag 20 überwacht.

Die Greifvorrichtung 10 kann dabei Schaltermittel vorsehen, insbesondere Drehcodierschalter, mit denen insbesondere die Geschwindigkeiten V_{gx} und V_{V} einstellbar sind.

## Patentansprüche

1. Verfahren zur Steuerung einer einen elektrischen Motor (14) aufweisenden Greif- oder Spannvorrichtung (10), mit wenigstens einer vom Motor (14) antreibbaren, zwischen Anschlägen (16, 17, 20) hin und rück verfahrbaren Backe (12), wobei in einer Anfahrphase die Backe (12) mit nur einer geringen Anfahrgeschwindigkeit V_{G} gefahren wird, mit der die Backe (12) beschädigungsfrei gegen den jeweiligen Anschlag (16, 17, 20) bewegt wird,
- wobei in der Anfahrphase die Position der Backe (12) bei der Beaufschlagung der Backe (12) gegen den Anschlag (16, 17, 20), und damit die Positionen des wenigstens einen Anschlags (16, 17, 20), gemessen und hinterlegt wird, und wobei in einer sich an die Anfahrphase anschließenden Betriebsphase die Backe (12) zunächst über eine Wegstrecke X_{V} mit einer Verfahrgeschwindigkeit V_{V} verfahren wird, die größer ist als die Anfahrgeschwindigkeit V_{G}, und die Backe (12) dann vor dem Auftreffen der Backe (12) auf den Anschlag (16, 17, 20) durch Reduzieren der Verfahrgeschwindigkeit V_{V} auf eine Bremsgeschwindigkeit V_{gx} abgebremst wird, so dass die Backe (12) beschädigungsfrei gegen den Anschlag (16, 17, 20) bewegt wird, **dadurch gekennzeichnet, dass** die Positionen der Backe (12) bei jeder Beaufschlagung der Backe (12) gegen einen Anschlag (16, 17, 20), also in der Anfahrphase und in der Betriebsphase, und damit die Positionen der Anschläge (16, 17, 20), gemessen und hinterlegt werden, und dass dann, wenn sich die Position des jeweiligen Anschlags bei verschiedenen, nacheinander folgenden Greifzyklen ändert, dies detektiert wird, und die Ansteuerung des Motors und das Abbremsen der Backe darauf abgestimmt werden.

2. Verfahren nach Anspruch 1, **dadurch gekennzeichnet, dass** der Motor (14) mit einem Greifstrom I_{G} kurz vor, zeitgleich mit oder kurz nach dem Auftreffen der Backe (12) auf den Anschlag (16, 17, 20) zur Beaufschlagung der Backe gegen den Anschlag (16, 17, 20) bestromt wird.

3. Verfahren nach Anspruch 1 oder 2, **dadurch gekennzeichnet, dass** die Bremsgeschwindigkeit V_{gx} und die Anfahrgeschwindigkeit V_{G} gleich sind.

4. Verfahren nach einem der vorhergehenden Ansprüche, **dadurch gekennzeichnet, dass** das Abbremsen der Backe (12) vor dem Auftreffen der Backe (12) auf den Anschlag (16, 17, 20) durch Abschalten des Motorstroms erfolgt.

5. Verfahren nach einem der vorhergehenden Ansprüche, **dadurch gekennzeichnet, dass** das Abbremsen der Backe (12) vor dem Auftreffen der Backe (12) auf den Anschlag (16, 17, 20) durch Bestromung des Motors mit einem Umkehrstrom erfolgt.

6. Verfahren nach einem der vorhergehenden Ansprüche, **dadurch gekennzeichnet, dass** die Reibung der Backe (12) und/oder eines zwischen der Backe (12) und dem Motor (14) vorgesehenen Getriebes derart ist, dass die Backe (12) bei Abschalten des Motorstroms abgebremst wird.

7. Verfahren nach einem der vorhergehenden Ansprüche, **dadurch gekennzeichnet, dass** die Verfahrgeschwindigkeit V_{V}, die Bremsgeschwindigkeit V_{gx}, die Anfahrgeschwindigkeit V_{G} und/oder die Auftreffgeschwindigkeit der Backe (12) überwacht wird.

8. Greif- oder Spannvorrichtung (10), mit wenigstens einer zwischen Anschlägen hin und rück verfahrbaren Backe (12), mit einem elektrischen Motor (14) zum Antreiben der Backe (12), mit Wegmessmitteln (28) zur Bestimmung der Lage der Backe (12), mit einer Steuerung (26) zur Ansteuerung des Motors (14) in Abhängigkeit der Signale der Wegmessmittel, **dadurch gekennzeichnet, dass** die Steuerung (26) derart ausgebildet und eingerichtete ist, dass sie die Greif- oder Spannvorrichtung (10) im Betrieb gemäß einem Verfahren nach einem der Ansprüche 1 bis 7 betreibt.

9. Greif- oder Spannvorrichtung nach Anspruch 8, **dadurch gekennzeichnet, dass** wenigstens ein Schaltermittel vorgesehen ist, mit dem der Verfahrstrom I_{V}, der Bremsstrom I_{B}, der Greifstrom I_{G}, die Verfahrgeschwindigkeit und/oder die Bremsgeschwindigkeit einstellbar sind.

10. Greif- oder Spannvorrichtung nach Anspruch 8 oder 9, **dadurch gekennzeichnet, dass** der Motor (14) ein Linearmotor oder ein rotierender Antrieb ist.

## Claims

1. Method for controlling a gripping or clamping device (10) having an electric motor (14), comprising at least one jaw (12) which can be driven by the motor (14) and can be moved back and forth between stops (16, 17, 20), the jaw (12) being moved in a start-up phase at only a low start-up speed V_{G}, at which the jaw (12) is moved against the relevant stop (16, 17, 20) without damage,
- the position of the jaw (12) when the jaw (12) strikes against the stop (16, 17, 20), and thus the positions of the at least one stop (16, 17, 20), being measured and stored in the start-up phase, the jaw (12) first being moved, in an operating phase following the start-up phase, over a distance Xᵥ at a travel speed Vᵥ which is greater than the start-up speed V_{G}, and the jaw (12) then being braked before the jaw (12) hits the stop (16, 17, 20) by reducing the travel speed Vᵥ to a braking speed V_{gx}, such that the jaw (12) is moved against the stop (16, 17, 20) without damage, **characterized in that** the positions of the jaw (12) each time the jaw (12) strikes against a stop (16, 17, 20), i.e. in the start-up phase and in the operating phase, and thus the positions of the stops (16, 17, 20), are measured and stored, and **in that**, if the position of the relevant stop changes during different, successive gripping cycles, this is detected and the control of the motor and the braking of the jaw are adjusted accordingly.

2. Method according to claim 1, **characterized in that** the motor (14) is supplied with a gripping current I_{G} shortly before, at the same time as, or shortly after the jaw (12) hits the stop (16, 17, 20), in order to cause the jaw to strike against the stop (16, 17, 20).

3. Method according to claim 1 or claim 2, **characterized in that** the braking speed V_{gx} and the start-up speed V_{G} are the same.

4. Method according to any of the preceding claims, **characterized in that** the jaw (12) is braked before the jaw (12) hits the stop (16, 17, 20) by switching off the motor current.

5. Method according to any of the preceding claims, **characterized in that** the jaw (12) is braked before the jaw (12) hits the stop (16, 17, 20) by supplying the motor with a reverse current.

6. Method according to any of the preceding claims, **characterized in that** the friction of the jaw (12) and/or of a gear provided between the jaw (12) and the motor (14) is such that the jaw (12) is braked when the motor current is switched off.

7. Method according to any of the preceding claims, **characterized in that** the travel speed Vᵥ, the braking speed V_{gx}, the start-up speed V_{G} and/or the impact speed of the jaw (12) is monitored.

8. Gripping or clamping device (10) comprising at least one jaw (12) which can be moved back and forth between stops, comprising an electric motor (14) for driving the jaw (12), comprising distance measuring means (28) for determining the position of the jaw (12), and comprising a controller (26) for controlling the motor (14) according to the signals from the distance measuring means, **characterized in that** the controller (26) is designed and configured such that it operates the gripping or clamping device (10) during operation in accordance with a method according to any of claims 1 to 7.

9. Gripping or clamping device according to claim 8, **characterized in that** at least one switch means is provided, by means of which the travel current lᵥ, the braking current I_{B}, the gripping current I_{G}, the travel speed and/or the braking speed can be set.

10. Gripping or clamping device according to claim 8 or claim 9, **characterized in that** the motor (14) is a linear motor or a rotating drive.

## Revendications

1. Procédé de commande d'un dispositif de préhension ou de serrage (10) présentant un moteur électrique (14), comportant au moins une mâchoire (12) qui peut être entraînée par le moteur (14) et qui peut coulisser entre des butées (16, 17, 20), la mâchoire (12) étant déplacée, dans une phase de démarrage, seulement à une vitesse de démarrage faible V_{G}, à laquelle la mâchoire (12) est déplacée sans dommage contre la butée respective (16, 17, 20),
- dans la phase de démarrage, la position de la mâchoire (12) contre la butée (16, 17, 20), et donc les positions de l'au moins une butée (16, 17, 20), étant mesurées et enregistrées lorsque la mâchoire (12) est sollicitée, et, dans une phase de fonctionnement suivant la phase de démarrage, la mâchoire (12) étant d'abord déplacée sur une distance de trajectoire Xᵥ à une vitesse de déplacement Vᵥ, laquelle est supérieure à la vitesse de démarrage V_{G}, et la mâchoire (12) étant ensuite freinée avant que la mâchoire (12) ne touche la butée (16, 17, 20) en réduisant la vitesse de déplacement Vᵥ à une vitesse de freinage V_{gx}, de sorte que la mâchoire (12) est déplacée sans dommage contre la butée (16, 17, 20), **caractérisé en ce que** les positions de la mâchoire (12), à chaque fois que la mâchoire (12) est sollicitée contre une butée (16, 17, 20), c'est-à-dire en phase de démarrage et en phase de fonctionnement, et donc les positions des butées (16, 17, 20), sont mesurées et enregistrées, et **en ce que**, lorsque la position de la butée respective est modifiée au cours de différents cycles de préhension successifs, cette modification est détectée et la commande du moteur et le freinage de la mâchoire sont réglés en conséquence.

2. Procédé selon la revendication 1, **caractérisé en ce que** le moteur (14) est alimenté en courant de préhension I_{G} peu avant, en même temps ou peu après que la mâchoire (12) touche la butée (16, 17, 20) afin de solliciter la mâchoire contre la butée (16, 17, 20).

3. Procédé selon la revendication 1 ou 2, **caractérisé en ce que** la vitesse de freinage V_{gx} et la vitesse de démarrage V_{G} sont identiques.

4. Procédé selon l'une des revendications précédentes, **caractérisé en ce que** la mâchoire (12) est freinée avant que la mâchoire (12) ne touche la butée (16, 17, 20) par coupure du courant du moteur.

5. Procédé selon l'une des revendications précédentes, **caractérisé en ce que** la mâchoire (12) est freinée avant que la mâchoire (12) ne touche la butée (16, 17, 20) en appliquant un courant inverse au moteur.

6. Procédé selon l'une des revendications précédentes, **caractérisé en ce que** le frottement de la mâchoire (12) et/ou d'un engrenage prévu entre la mâchoire (12) et le moteur (14) est tel que la mâchoire (12) est freinée lorsque le courant du moteur est coupé.

7. Procédé selon l'une des revendications précédentes, **caractérisé en ce que** la vitesse de déplacement Vᵥ, la vitesse de freinage V_{gx}, la vitesse de démarrage V_{G} et/ou la vitesse d'impact de la mâchoire (12) sont surveillées.

8. Dispositif de préhension ou de serrage (10), comportant au moins une mâchoire (12) qui peut coulisser entre des butées, comportant un moteur électrique (14) servant à entraîner la mâchoire (12), comportant des moyens de mesure de trajectoire (28) servant à déterminer la position de la mâchoire (12), comportant un moyen de commande (26) servant à commander le moteur (14) en fonction des signaux des moyens de mesure de trajectoire, **caractérisé en ce que** le moyen de commande (26) est conçu et configuré de telle sorte qu'il fait fonctionner le dispositif de préhension ou de serrage (10) lors de son fonctionnement selon un procédé selon l'une des revendications 1 à 7.

9. Dispositif de préhension ou de serrage selon la revendication 8, **caractérisé par** au moins un moyen de commutation permettant de régler le courant de déplacement Iᵥ, le courant de freinage I_{B}, le courant de préhension I_{G}, la vitesse de déplacement et/ou la vitesse de freinage.

10. Dispositif de préhension ou de serrage selon la revendication 8 ou 9, **caractérisé en ce que** le moteur (14) est un moteur linéaire ou un entraînement rotatif.
